Europäisches Patentamt

European Patent Office

Office européen des brevets

(19)

(11) Numéro de publication: **0 000 455**

**B1**

(12)

# FASCICULE DE BREVET EUROPEEN

(21) Numéro de dépôt: **78400032.5**

(22) Date de dépôt: **22.06.78**

(51) Int. Cl³: **E 05 F 15/14, B 60 J 7/18**

(54) Dispositif de fermeture d'un organe coulissant, notamment d'un toit ouvrant de véhicule automobile

(30) Priorité: **11.07.77 FR 7721260**

(43) Date de publication de la demande:
**24.01.79 Bulletin 79/02**

(45) Mention de la délivrance du brevet:
**23.07.80 Bulletin 80/15**

(84) Etats contractants désignés:
**DE GB SE**

(56) Documents cités:
**FR - A - 1 482 016**

(73) Titulaire: **Société dite: Compagnie Industrielle de Mecanismes en abrégé C.I.M.**
**6, Rue Barbès**
**F - 92302 Levallois Perret (FR)**

(72) Inventeur: **Periou, Pierre**
**15, Les Bocages Bruns**
**F - 92000 Clergy (FR)**
**Rampignon, Marc**
**20, Avenue Henri Dunant**
**F - 93000 Villemomble (FR)**

(74) Mandataire: **Polus, Camille**
**c/o Cabinet Lavoix 2, Place d'Estienne d'Orves**
**F - 75441 Paris Cedex 09 (FR)**

Courier Press, Leamington Spa, England.

# Dispositif de fermeture d'un organe coulissant, notamment d'un toit ouvrant de véhicule automobile

La présente invention concerne un dispositif de fermeture d'un organe coulissant, notamment d'un toit ouvrant de véhicule automobile, dont est solidaire une tige transversale portant un pignon moteur en prise avec une crémaillère longitudinale fixe.

Lors de la fermeture d'un toit ouvrant d'automobile, l'effort moteur, en général, reste constant et modéré pendant presque toute la course et croît brusquement pendant le ou les derniers centimètres, soit pour tendre la toile lorsqu'il s'agit d'un toit souple, soit, dans le cas d'un toit rigide, pour comprimer des joints d'étanchéité.

Il est clair que la puissance du moteur doit être calculée sur l'effort final, ce qui est coûteux et, de plus, dangereux dans le cas où un passager laisse dépasser sa tête dans l'ouverture lorsque le moteur est mis en marche.

Par ailleurs, il est connu (brevet FR 1 482 016) d'utiliser un moteur à réducteur irréversible pour éviter la réouverture du toit. Dans ce cas, les organes du réducteur doivent supporter en permanence l'effort final, parfois pendant plusieurs mois; ils restent donc longtemps sous contrainte tout en étant soumis à des variations climatiques importantes, et peuvent de ce fait se déformer, par exemple s'ils sont réalisés en une matière fluant à température ambiante élevée.

L'invention a pour but de fournir un dispositif de fermeture permettant de réduire de façon importante le couple nécessaire pour obtenir l'effort final de fermeture et, en même temps, de verrouiller l'organe coulissant en position de fermeture en soulageant les organes du réducteur.

A cet effet, l'invention a pour objet un dispositif du type précité, caractérisé en ce qu'il comprend un élément denté fixé ou articulé à l'extrémité avant de la crémaillère et dont la denture présente une partie avant incurvée et une partie arrière pratiquement rectiligne, et des moyens pour obliger le pignon à rester en prise avec ladite partie incurvée en fin de course de fermeture.

De préférence, pour soulager aussi les dents du pignon et de la crémaillère, l'élément denté comporte, au moins dans sa partie incurvée, une rampe de même profil sur laquelle s'appuie un galet porté par la tige.

D'autres caractéristiques et avantages de l'invention ressortiront de la description qui va suivre, donnée à titre d'exemple non limitatif et en regard des dessins annexés, sur lesquels:

La Fig. 1 est une vue en élévation latérale d'un dispositif de fermeture conforme à l'invention;

La Fig. 2 est une vue en plan du dispositif de la Fig. 1;

Les Fig. 3 et 4 sont des vues analogues à la Fig. 1 illustrant le fonctionnement de ce dispositif.

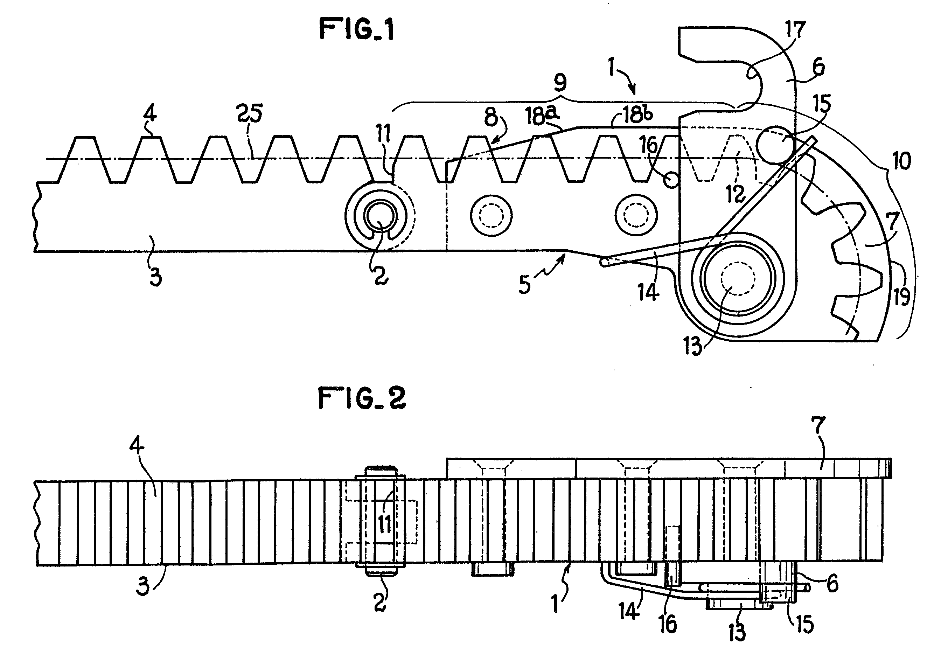

Le dispositif 1 représenté aux Fig. 1 et 2 est articulé à son extrémité arrière, par un axe 2, à l'extrémité avant d'une crémaillère fixe rectiligne 3 présentant sa denture 4 sur sa face supérieure. Ce dispositif comprend essentiellement un élément denté 5, un crochet 6, 17 et une rampe 7.

L'élément 5 est une petite crémaillère dont la denture 8, dans la position de repos de la Fig. 1, prolonge sur la même largeur la denture 4 de la crémaillère fixe 3. La denture 8 comporte une partie arrière rectiligne 9 dont les dents ont des flancs plans, et une partie avant 10 en forme de secteur de roue dentée s'étendant sur un peu plus d'un quart de cercle, dirigée vers le bas, dont les dents ont des flancs bombés. Pour permettre le basculement vers le haut de l'élément 5 autour de l'axe 2, la base 11 de sa première dent est abattue. La dent 12 située à la jonction entre les parties 9 et 10 de la denture 8 présente une face arrière plane et une face avant bombée.

Le crochet 6, 17 est constitué par un levier plan rectiligne 6 accolé à un côté de l'élément 5. L'extrémité inférieure de ce levier tourillonne sur une axe 13 passant par le centre du quart de cercle 10. Un ressort spiral 14 tendu entre la face inférieure de l'élément 5 et un téton 15 du levier 6 et enroulé autour de l'axe 13 maintient normalement ce levier en appui, en position verticale, contre une butée 16 qui fait saillie latéralement sur l'élément 5. La partie du levier 6 qui dépasse au-dessus de la denture 8 présente une échancrure 17 ouverte vers l'arrière dont le fond est un demi-cercle centré à la verticale de l'axe 13.

La rampe 7 est constituée par une tôle plaquée et rivetée contre la face latérale de l'élément 5 opposée au levier 6; le bord supérieur de cette tôle forme une rampe de roulement parallèle à la denture 8 mais en saillie légère par rapport à celle-ci, précédée d'une partie d'abordage ascendante 18$^a$ et constituée d'une partie arrière plane 18$^b$ et d'une partie avant 19 en quart de cylindre.

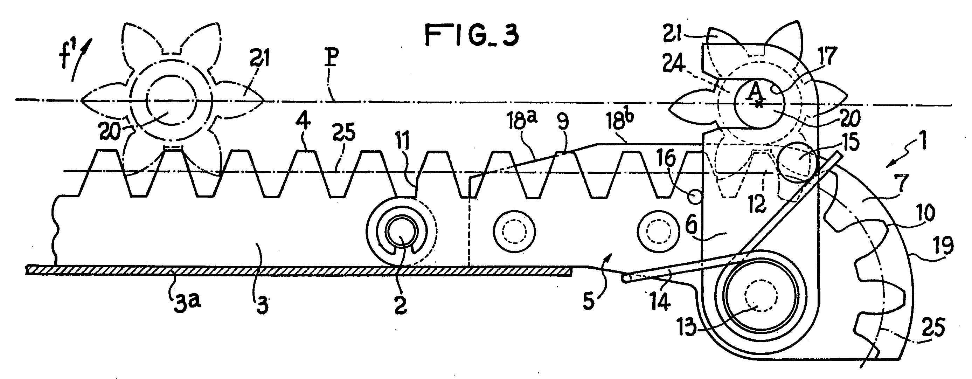

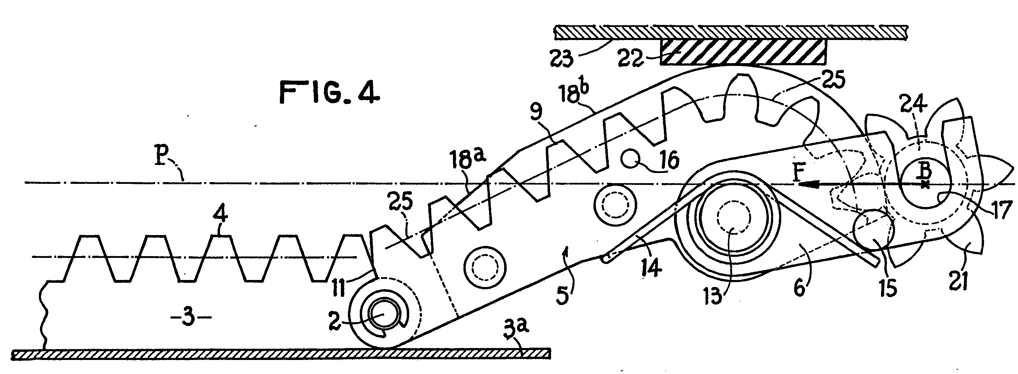

Le dispositif 1 est utilisé à l'extrémité avant d'un toit ouvrant d'automobile, dans les conditions suivantes illustrées aux Fig. 3 et 4.

Le toit ouvrant est solidaire d'une tige transversale 20 guidée en translation horizontale, par des moyens non représentés, dans un plan P passant par le centre de l'échancrure 17; le fond de celle-ci a le même diamètre que la tige 20. Cette tige est reliée sans glissement à l'organe de sortie du réducteur d'un moteur d'actionnement du toit ouvrant (non représenté). Sur chacune de ses extrémités est calé un pignon 21, par exemple en matière plastique, dont les dents ont des faces bombées et qui est en prise avec une crémaillère longitudinale 3 fixée à la carrossiere du véhicule. Chaque crémaillère 3 porte à son extrémité un dispositif 1 articulé tel que décrit plus haut.

Sur la presque totalité de sa course de fermeture chaque pignon 21 est en prise avec la crémaillère 3 correspondante, comme représenté en traits mixtes à la Fig. 3. Puis ce pignon roule dans le sens $f^1$ sur la partie 9 de l'élément 5 jusqu'à ce que la tige 20 soit reçue, au point A, dans le fond de l'échancrue 17 du crochet 6, 17.

Le pignon 21 continue à être entraîné en rotation dans le sens $f^1$ par la tige 20, dont l'axe est contraint de rester dans le plan P. Il se produit alors un roulement du pignon sur la denture courbe 10 avec, simultanément, une rotation de l'élément 5 vers le haut autour de l'axe 2 et une rotation vers le bas du crochet 6, 17 par rapport à l'élément 5, à l'encontre du ressort 14.

Ce mouvement se poursuit jusqu'à ce que la rampe 7 rencontre une butée souple 22 (non représentée sur la Fig. 3) fixée sur la face inférieure d'un support rigide 23 constitué par exemple par la carrosserie du véhicule. Dans cette position limite correspondant à une rotation de l'élément 5 autour de l'axe 2 de l'ordre de 20 à 30°, représentée à la Fig. 4, le centre de la tige 20 se trouve au point B et a légèrement dépassé l'alignement entre les axes 2 et 13, ou encore ce qui revient au même, l'alignement entre la tige 20, le sommet de la dent de pignon en prise avec la denture 10 et l'axe 2 est légèrement franchi.

Simultanément, un galet 24 monté fou sur l'extrémité correspondante de la tige 20, à l'extérieur du pignon 21, a abordé la rampe 7 par son extrémité arrière 18$^a$—18$^b$ et a roulé le long de celle-ci.

Dans la position de la Fig. 4, le dispositif 1 est autoi-verrouillé quel que soit l'effort de traction F s'exerçant dans le plan P. Cet effort est à peu près intégralement supporté par l'appui du galet 24 sur la partie 19 de la rampe 7. Il n'est pas nécessaire de continuer à exercer un couple sur la tige 20.

Il est clair que les mêmes mouvements et effets se produisent en même temps à l'autre extrémité de la tige 20.

En pratique, on peut donner à la partie 10 de la denture 8 une longueur légèrement supérieure à celle sur laquelle l'effort de fermeture croît, c'est-à-dire une longueur d'environ 15 mm. La courbure de cette partie 10 assure une démultiplication importante de l'effort, de sorte que l'accroissement de couple moteur à fournir n'est plus que la moitié environ de ce qu'il serait si la crémaillère 3 se prolongeait jusqu'au point B.

Il résulte de ce qui précède que l'on peut d'une part utiliser un moteur nettement moins puissant que dans la technique antérieure et pourvu d'un réducteur réversible et/ou constitué d'organes économiques, par exemple en matière plastique, puisque ce réducteur n'est soumis à aucun effort important lorsque le toit est fermé.

Pour ouvrir le toit, le moteur fait tourner la tige 20 et le pignon 21 dans le sens $f^2$ opposé à $f^1$. Le pignon roule alors sur la partie 10 de la denture 8 en provoquant le retour de l'élément 5 dans sa position de repos de la Fig. 3, définie par sa venue en butée contre le support 3$^a$ de la crémaillère 3. Pendant ce temps, le ressort 14 fait revenir le levier 6 en position verticale contre la butée 16. Le pignon 21 roule ensuite successivement sur la partie 9 de la denture 8 et sur la crémaillère 3.

En variante, le galet 24 peut avoir pour diamètre le diamètre primitif du pignon 21 et rouler sur une rampe suivant la courbe primitive 25 de la denture 8. Dans ce cas, le galet 24 peut être calé sur la tige 20, ou venu de matière avec le pignon 21, puisqu'il tourne à la même vitesse que ce dernier en roulant sur la rampe. Cette solidarisation galet-pignon peut d'ailleurs être prévue dans tous les cas, car un roulement avec glissement du galet 24 sur la rampe 7 ne présente pas d'inconvénient sérieux.

En variante encore, le levier 6 pourrait être suspendu, librement rotatif, à la tige 20, éventuellement avec un ressort de rappel contre une butée d'un palier de guidage de cette tige, avec l'encoche 17 dirigée vers l'avant et accrochant un téton prévu sur l'élément 5 à l'emplacement de l'axe 13. D'autres moyens peuvent d'ailleurs être prévus pour forcer le pignon 21 à rouler sur la partie 10 de la denture 8, par exemple une tôle fixée sur la face latérale de l'élément 5 opposée à la rampe 7 et munie d'une fente en secteur circulaire ouverte vers l'arrière à l'emplacement de l'encoche 17 de la Fig. 3.

L'ensemble constitué par l'élément 5, la rampe 7 et éventuellement une telle tôle fendue peut être moulé d'une seule pièce en une matière appropriée.

Il est à noter qu'en pratique, la crémaillère fixe 3 a souvent une légère courbure dans un plan vertical pour suivre la forme du toit du véhicule. Dans ce cas, la partie 9 de l'élément 5 a une courbure analogue.

En variante, l'élément 5 peut être fixé rigidement à la crémaillère 3 dans la position de la Fig. 1, et l'ensemble tige 20-pignon 21 peut se déplacer dans une fente verticale prévue dans le palier de guidage, ce palier étant guidé en translation horizontale.

Bien entendu, l'invention peut s'appliquer à la fermeture d'autres organes coulissants, notamment de ceux, tels que les portes hermétiques, qui exigent un effort accru en fin de course.

**Revendications**

1. Dispositif de fermeture d'un organe coulissant, notamment d'un toit ouvrant de véhicule automobile, dont est solidaire une tige transversale portant un pignon moteur en prise avec une crémaillère longitudinale fixe, caractérisé en ce qu'il comprend un élément denté (5) prolongeant l'extrémité avant de la crémaillère (3) et dont la denture (8) présente une partie avant (10) incurvée et une partie arrière (9) pratiquement rectiligne, et des moyens (6, 17) pour obliger le pignon (21) à rester en prise avec ladite partie incurvée (10) en fin de course de fermeture.

2. Dispositif suivant la revendication 1, caractérisé en ce que l'élément denté (5) est articulé sur l'extrémité avant de la crémaillère (3), la tige (20) étant guidée en translation rectiligne.

3. Dispositif suivant la revendication 1, caractérisé en ce que l'élément denté est fixé rigidement à l'extrémité avant de la crémaillère, la tige pouvant coulisser dans une fente perpendiculaire à la crémaillère prévue dans une palier de guidage guidé en translation rectiligne.

4. Dispositif suivant la revendication 2, caractérisé en ce qu'il comprend une butée (22, 23) limitant le mouvement de rotation de l'élément denté (5) à une position située légèrement au-delà de l'alignement du centre du pignon (21), du centre de courbure (13) de ladite partie incurvée (10) au point d'appui du pignon et du point d'articulation (2) dudit élément (5).

5. Dispositif suivant la revendication 3, caractérisé en ce que la butée comprend une butée (22) fixée à un support rigide (23).

6. Dispositiff suivant l'une quelconque des revendications 1 à 5, caractérisé en ce que la partie incurvée (10) de l'élément denté (5) a la forme d'un secteur circulaire.

7. Dispositif suivant l'une quelconque des revendications 1 à 6, caractérisé en ce que lesdits moyens comprennent un crochet (6, 17) pour la tige transversale (20) articulé sur l'élément denté (5) et rappelé élastiquement vers une position située sur le trajet (P) de cette tige, au droit de la jonction entre les deux parties (9—10) dudit élément (5).

8. Dispositif suivant les revendications 6 et 7, caractérisé en ce que la partie occrochante (17) constitue l'extrémité libre d'un levier (6) articulé à son autre extrémité au centre (13) de ladite partie incurvée (10).

9. Dispositif suivant l'une quelconque des revendications 1 à 8, caractérisé en ce que l'élément denté (5) comporte, au moins dans sa partie incurvée (10), une rampe (7) de même profil sur lequel s'appuie un galet (24) porté par la tige (20).

10. Dispositif suivant la revendication 9, caractérisé en ce que le galet (24) est monté fou sur la tige (20).

11. Dispositif suivant la revendication 9, caractérisé en ce que la galet est venu de matière avec le pignon (21).

12. Dispositif suivant l'une quelconque des revendications 9 à 11, caractérisé en ce que la rampe (7) suit la courbe primitive (25) de la denture (8) dudit élément (5), le galet (24) ayant pour diamètre la diamètre primitif du pignon (21).

**Claims**

1. A device for closing a slidable element, in particular an openable roof of an automobile vehicle, on which is mounted a transverse spindle carrying a driving gear pinion meshed with a fixed longitudinally-extending rack, characterized by a toothed member (5) extending the front end of the rack (3) and having a set of teeth (8) having a curved front portion (10) and a substantially rectilinear rear portion (9), and means (6, 17) for constraining the pinon (21) to remain meshed with said curved portion (10) at the end of the closing travel.

2. A device as claimed in claim 1, characterized in that the toothed member (5) is pivotally mounted on the front end of the rack (3) and the spindle (20) is guided in rectilinear translation.

3. A device as claimed in claim 1, characterized in that the toothed member is rigidly fixed to the front end of the rack, the spindle being capable of sliding in a slot which is perpendicular to the rack and provided in a guide bearing guided in rectilinear translation.

4. A device as claimed in claim 2, characterized by a stop member (22, 23) for limiting the movement of rotation of the toothed member (5) to a position slightly beyond that in which the centre of curvature (13) of said curved portion (10) at the point where it engages the pinion (21), the axis of the pinion (21) and the axis of the pivotal mounting (2) of said toothed member (5) are aligned.

5. A device as claimed in claim 3, wherein the stop member comprises a flexible stop member (22) secured to a rigid support (23).

6. A device as claimed in any one of the claims 1 to 5, wherein the curved portion (10) of the toothed member (5) has a shape of a sector of a circle.

7. A device as claimed in any one of the claims 1 to 6, wherein said means comprise a hook member (6, 17) for the transverse spindle (20), the hook member being pivotally mounted on the toothed member (5) and elastically biased toward a position located in the path (P) of said spindle in the region of the junction between said two portions (9, 10) of said toothed member (5).

8. A device as claimed in claims 6 and 7, wherein the hooking portion (17) constitutes the free end of a lever (6) which is pivotally mounted, adjacent its other end, at the centre (13) of said curved portion (10).

9. A device as claimed in any one of the claims 1 to 8, wherein the toothed member (5) comprises, at least in said curved portion (10) thereof, a ramp (7) having the same profile on which a roller (24) carried by the spindle (20) bears.

10. A device as claimed in claim 9, wherein the roller (24) is freely rotatable on the spindle (20).

11. A device as claimed in claim 9, wherein the roller is in one piece with the pinion (21).

12. A device as claimed in claim 9, 10 or 11, wherein the ramp (7) follows the pitch line (25) of the set of teeth (8) of said toothed member (5), the roller (24) having a diameter which equals the pitch diameter of the pinion (21).

**Patentansprüche**

1. Schließvorrichtung für ein Schiebeteil, insbesondere ein Autoschiebedach, das mit einem querverlaufenden Stab fest verbunden ist, welcher ein Antriebszahnrad aufweist, das mit einer feststehenden längsverlaufenden Zahnleiste in Eingriff steht, dadurch gekennzeichnet, daß sie ein das vordere Ende der Zahnleiste (3) fortsetzendes gezahntes Element (5), dessen Verzahnung (8) einen gekrümmten vorderen Abschnitt (10) und einen praktisch geraden hinteren Abschnitt (9) aufweist, und eine Einrichtung (6, 17), welche das Zahnrad (21) am Ende der Schließbewegung mit dem gekrümmten Abschnitt (10) in Eingriff hält, umfaßt.

2. Vorrichtung nach Anspruch 1, dadurch gekennzeichnet, daß das gezahnte Element (5) am Vorderende der Zahnleiste (3) angelenkt ist und daß der Stab (20) in einer geradlinigen Bewegung geführt ist.

3. Vorrichtung nach Anspruch 1, dadurch gekennzeichnet, daß das gezahnte Element am Vorderende der Zahnleiste starr befestigt ist und daß der Stab in einem zur Zahnleiste senkrechten Schlitz gleiten kann, der in einem in einer geradlinigen Bewegung geführten Führungslager vorgesehen ist.

4. Vorrichtung nach Anspruch 2, dadurch gekennzeichnet, daß sie einen Anschlag (22, 23) aufweist, der die Schwenkbewegung des gezahnten Elements (5) in einer Stellung begrenzt, die etwas jenseits der Fluchtung des Mittelpunkts des Zahnrades (21), des Krümmungsmittelpunkts (13) des gekrümmten Abschnitts (10) in Haltepunkt des Zahnrades und des Anlenkpunktes (2) des Elements (5) liegt.

5. Vorrichtung nach Anspruch 3, dadurch gekennzeichnet, daß der Anschlag einen auf einem steifen Träger (23) angebrachten weichen Anschlag (22) umfaßt.

6. Vorrichtung nach einem der Ansprüche 1 bis 5, dadurch gekennzeichnet, daß der gekrümmte Abschnitt (10) des gezahnten Elements (5) die Form eines Kreissektors hat.

7. Vorrichtung nach einem der Ansprüche 1 bis 6, dadurch gekennzeichnet, daß die Einrichtung einen Haken (6, 17) für den querverlaufenden Stab (20) aufweist, der an dem gezahnten Element (5) angelenkt ist und in eine Stellung elastisch rückgeholt wird, die über der Bewegungsbahn (P) des Stabs in Bereich des Übergangs zwischen den beiden Abschnitten (9, 10) des Elements (5) liegt.

8. Vorrichtung nach den Ansprüchen 6 und 7, dadurch gekennzeichnet, daß das Einhakteil (17) das freie Ende eines mit seinem anderen Ende im Mittelpunkt (13) des gekrümmten Abschnitts (10) angelenkten Hebels (6) bildet.

9. Vorrichtung nach einem der Ansprüche 1 bis 8, dadurch gekennzeichnet, daß das gezahnte Element (15) zumindest in seinem gekrümmten Abschnitt (10) eine Rampe (7) gleichen Profils aufweist, an die sich eine auf dem Stab (20) sitzende Laufrolle (24) legt.

10. Vorrichtung nach Anspruch 9, dadurch gekennzeichnet, daß die Laufrolle (24) auf dem Stab (20) lose angebracht ist.

11. Vorrichtung nach Anspruch 9, dadurch gekennzeichnet, daß die Laufrolle mit dem Zahnrad (21) einstückig ist.

12. Vorrichtung nach einem der Ansprüche 9 bis 11, dadurch gekennzeichnet daß die Rampe (7) dem Teilkreis (25) der Verzahnung (8) des Elements (5) folgt, und daß die Laufrolle (24) als Durchmesser den Teilkreisdurchmesser des Zahnrades (21) hat.

## FIG.1

## FIG.2

0 000 455

FIG_3

FIG. 4

0 000 455